# EUROPEAN PATENT APPLICATION

(11) **EP 3 349 409 A1**
(43) Date of publication of application: **18.07.2018**
(21) Application number: 15906561.4
(22) Date of filing: 08.12.2015
(51) Int. Cl.: H04L 29/06

(54) **DEVICE AND METHOD FOR MANAGING LINKAGE CONTROL PRIVILEGE**

(30) Priority: 23.10.2015 CN 201510696121
(71) Applicant: Institute of Acoustics, Chinese Academy of Sciences, Haidian District Beijing 100190 (CN); Shanghai 3NTV Network Technology Co. Ltd., Shanghai 200072 (CN)
(72) Inventor: YANG, Zhongzhen, Beijing 100190 (CN); WANG, Jinlin, Beijing 100190 (CN); LIU, Xue, Beijing 100190 (CN); DANG, Shoujiang, Beijing 100190 (CN)
(74) Representative: Hanna Moore + Curley
(86) International application number: PCT/CN2015/096606
(87) International publication number: WO 2017/067045

(57) **Abstract**

The present invention relates to a device for managing a linkage control privilege, comprising: a linkage service system and multiple linkage terminals; in one service instance, one linkage terminal can only play one role, i.e., a control terminal or a controlled terminal, within a period of time; the control terminal obtains a privilege token of the controlled terminal so as to perform linkage control on the controlled terminal; the linkage service system is configured to maintain the roles of the linkage terminals and the states of the privilege tokens, process or transfer application for the privilege tokens, and initiate or transfer recycling of the privilege tokens. The present invention enables multiple control terminals to sequentially perform linkage operations on one controlled terminal, including sequential distribution, allocation, recycling, and transfer of privilege tokens.

## Description

### TECHNICAL FIELD

The present invention relates to a multi-terminal linkage technology, and particularly to a device and method for managing linkage control privilege.

### BACKGROUND OF THE INVENTION

Nowadays with the popularization of multi-terminal apparatuses, when people use services, they are no longer satisfied with using services separately by different terminals but require to utilize multiple terminals to perform multi-terminal interactive operations, thereby facilitating user operations and improving user experience.

In a multi-terminal linkage service system, there often exists a circumstance where multiple control ends simultaneously initiate linkage requests to one controlled end. For instance, multiple mobile phones, which are bound to one smart television, might simultaneously perform linkage operations on the smart television. To ensure the orderliness and manageability of the operations of the multiple terminals, there is a need to effectively manage privilege token of control ends. However, the prior art lacks a method for effectively managing multi-terminal linkage operations.

### SUMMARY OF THE INVENTION

An object of the present invention is to overcome the drawback that the prior art lacks a method for effectively managing multi-terminal linkage operations, and thereby to provide a device and method for managing linkage control privilege, which can improve the friendliness of multi-terminal linkage operations.

To achieve the foregoing object, the present invention provides a device for managing linkage control privilege comprising a linkage service system 102 and linkage terminals, wherein there are a plurality of the linkage terminals, and in a same service instance one linkage terminal can only play one role within a same period of time: a control end 101 or a controlled end 103; the control end 101 obtains a privilege token of the controlled end 103 and performs in turn linkage control on the controlled end 103; the linkage service system 102 is configured to maintain the roles of the linkage terminals and states of the privilege tokens, process or transfer applications for the privilege tokens, and initiate or transfer recycling of the privilege tokens.

In the foregoing technical solution, the linkage terminal, after getting online, applies for a role to the linkage service system 102, and the linkage service system 102 configures the role for the linkage terminal; when the linkage terminal is configured as the role of the controlled end, the linkage service system 102 generates for the linkage terminal a unique privilege token of linkage control corresponding to the role of the controlled end, i.e., the linkage service system 102 issues the privilege token to the linkage terminal; when the linkage terminal is modified to the role of the control end from the role of the controlled end or gets offline, the linkage service system 102 revokes the privilege token.

In the foregoing technical solution, the privilege token of one controlled end 103 can only be held by one control end 101 within a same period of time, while one control end 101 can apply for or hold privilege tokens of multiple controlled ends 103.

In the foregoing technical solution, when the control end 101 applies for a privilege token of linkage to the linkage service system 102, the privilege token is allocated or rejected to allocate according to rules, wherein the rules for allocating or rejecting to allocate privilege tokens include:
(1) an arbiter effects allocation of privilege tokens, and the linkage service system 102 or the controlled end 103 acts as the arbiter;
(2) if the arbiter is the linkage service system 102, then an application request for a privilege token, after being received from the control end 101, is processed directly; if the arbiter is the controlled end 103, then the linkage service system 102, after receiving the application request for the privilege token, forwards the request to the controlled end 103, and then the controlled end 103 processes the request;
(3) when the arbiter receives the application request for the privilege token from the control end 101, if the arbiter judges the privilege token is not held by other control end 101, the arbiter directly allocates the privilege token to the control end 101; if the privilege token is held by other control end 101, the arbiter takes back the privilege token and re-allocates it to the control end 101 or rejects the request;
(4) when it is within a preset period of time after the request of the control end 101 for the privilege token is rejected, and the privilege token is already held by other control end 101, if the control end 101 requests the same privilege token again, the linkage service system 102 directly rejects the request;
(5) the arbiter can recycle the privilege token according to a state of the control end 101, the state of the control end including, but not limited to: an online state, a session state, an interaction frequency or whether linkage control is beyond authority or not;
(6) when the control end 101 that formerly performed a linkage operation withdraws from linkage control, the linkage service system 102 proactively notifies the control end 011 whose request for the privilege token was rejected if the control end 101 performs linkage control.

In the foregoing technical solution, instructions of role applications, as well as instructions of applications for, allocation and recycling of the privilege tokens, of the linkage terminals, are all through the linkage service system 102.

The present invention further provides a method for managing linkage control privilege on the basis of the device for managing linkage control privilege, and the method includes applying for a privilege token, which specifically comprises:
step 201), applying for, by the control end 101, the privilege token to the linkage service system 102;
step 202), judging, by the linkage service system 102 after receiving the request, whether the control end 101 was rejected within a preset period of time or not, and if yes, performing step 203); otherwise, performing step 205);
step 203), judging, by the linkage service system 102, whether the privilege token has been allocated or not, and if yes, performing step 204); otherwise, performing step 205);
step 204), rejecting, by the linkage service system 102, this linkage request, and re-starting timing; and then performing step 212);
step 205), forwarding, by the linkage service system 102, the request to a corresponding arbiter according to configuration, and performing step 206);
step 206), deciding, by the arbiter, whether to accept this application and notifying the linkage service system 102 of an arbitration result, and then performing step 207);
step 207), judging, by the linkage service system 102, whether the result is rejected or not; and if the result is rejected, performing step 204), and if the result is accepted, performing step 208);
step 208), judging, by the linkage service system 102, whether the privilege token has been allocated at this request or not; if yes, performing step 209); otherwise, performing step 210);
step 209), notifying, by the linkage service system 102, the linkage terminal, which formerly held the privilege token, to take back the control privilege, and then performing step 210);
step 210), notifying, by the linkage service system 102, the control end 101 to accept this request, and then performing step 211);
step 211), notifying, by the linkage service system 102, the controlled end 103 that its corresponding privilege token is allocated to the control end 101, and then performing step 212).
step 212), ending the flow.

In the foregoing technical solution, the method further comprises releasing a privilege token, specifically comprising:
step 301), initiating, by the control end 101, a request for withdrawing from linkage, and then performing step 302);
step 302), recycling, by the linkage service system 102, the privilege token, and then performing step 303);
step 303), notifying, by the linkage service system 102, the controlled end 103 that a previous linkage has been removed, and then performing step 304);
step 304), updating, by the linkage service system 102, a linkage state, and then performing step 305);
step 305), notifying, by the linkage service system 102, the control end 101 which was rejected that it can re-initiate the application request for the privilege token, and then performing step 306);
step 306), re-applying for, by the control end 101 which was previously rejected, the privilege token.

The present invention has advantages as below:
1. the present invention makes it possible for multiple control ends to orderly perform linkage operations on one controlled end, including orderly issuance, allocation, recycling and transfer of privilege tokens;
2. the present invention sets time windows, and if a control end re-initiates a request for obtaining a privilege token within a predefined time window, the request will be rejected, thereby improving the service efficiency of the device.

### BRIEF DESCRIPTION OF THE DRAWINGS

Fig. 1 shows a schematic view of a device for managing linkage control privilege in accordance with the present invention;
Fig. 2 shows a flowchart of applying for a privilege token in a method for managing linkage control privilege in accordance with the present invention;
Fig. 3 shows a flowchart of releasing a privilege token in a method for managing linkage control privilege in accordance with the present invention.

### DETAILED DESCRIPTION OF THE INVENTION

Now the present invention is further described in conjunction with the accompanying drawings.

Before illustrating the present invention in detail, a uniform description is first presented to concepts as involved in the present invention.

Linkage: it refers to such operations that multiple linkage terminals perform synchronous interactions of instructions and data within a same service instance of a business service system.

Linkage control privilege: it refers to permission that one linkage terminal performs linkage control on other linkage terminal, and in the present invention, the linkage control privilege is identified and managed using a privilege token.

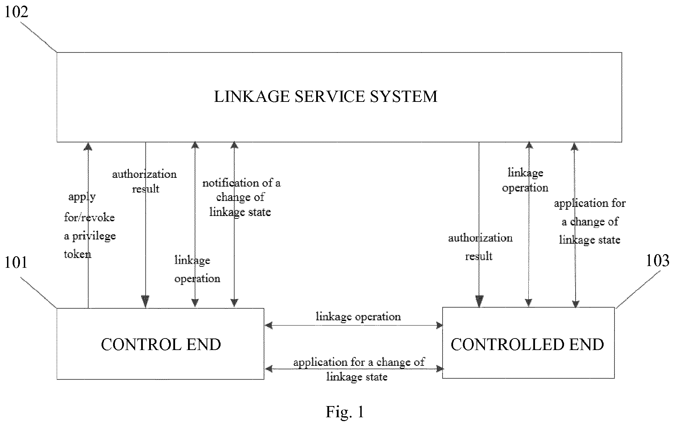

With reference to Fig. 1, a device for managing linkage control privilege in accordance with the present invention comprises: a linkage service system 102, and linkage terminals; wherein there are a plurality of the linkage terminals, and in a same service instance one linkage terminal only plays one role within a same period of time: a control end 101 or a controlled end 103. The control end 101 obtains a privilege token of the controlled end 103 and performs in turn linkage control on the controlled end 103. The linkage service system 102 is configured to maintain the roles of the linkage terminals and states of the privilege tokens, process or transfer applications for the privilege tokens, and initiate or transfer recycling of the privilege tokens.

A further illustration is presented below to the device for managing linkage control privilege in accordance with the present invention.

A linkage terminal, after getting online, applies for a role to the linkage service system 102, and the linkage service system 102 configures the role for the linkage terminal.

When the linkage terminal is configured as the role of the controlled end, the linkage service system 102 will generate for the linkage terminal a unique privilege token of linkage control corresponding to the role of the controlled end, i.e., the linkage service system 102 issues the privilege token to the linkage terminal. When the linkage terminal is modified to the role of the control end from the role of the controlled end or gets offline, the linkage service system revokes the privilege token.

The privilege token of one controlled end can only be held by one control end within a same period of time, while one control end may apply for or hold privilege tokens of a plurality of controlled ends.

Instructions of role applications, as well as instructions of applications for, allocation and recycling of the privilege tokens, of the linkage terminals, are all through the linkage service system 102.

When the control end 101 applies for a privilege token of linkage to the linkage service system 102, the privilege token is either allocated or rejected to allocate according to rules, wherein the rules for allocating or rejecting to allocate privilege tokens include:
(1) an arbiter effects allocation of privilege tokens, and the linkage service system 102 or the controlled end 103 may be selected as the arbiter according to business design requirements in the present invention; rules for selecting the arbiter are not limited to static configuration and dynamic application;
(2) if the arbiter is the linkage service system 102, an application request for a privilege token, after being received from the control end 101, is processed directly; if the arbiter is the controlled end 103, then the linkage service system 102, after receiving an application request for a privilege token, forwards the request to the controlled end 103, and then the controlled end 103 processes the request;
(3) when the arbiter receives an application request for a privilege token from the control end 101, if the arbiter judges that the privilege token is not held by other control end 101, the arbiter may directly allocate the privilege token to the control end 101; if the privilege token is held by other control end 101, the arbiter may take back the privilege token and re-allocate it to the control end 101 or reject the request;
(4) when it is within a preset period of time after the request of the control end 101 for a privilege token is rejected, and the privilege token is already held by other control end 101, if the control end 11 requests the same privilege token again, the linkage service system 102 directly rejects the request;
(5) the arbiter may recycle a privilege token according to a state of the control end 101, the state of the control end including, but not limited to: an online state, a session state, an interaction frequency and whether linkage control is beyond authority or not;
(6) when a control end 101 that formerly performed a linkage operation withdraws from linkage control, the linkage service system 102 proactively notifies the control end 101 whose request for a privilege token was rejected if the control end 101 performs linkage control.

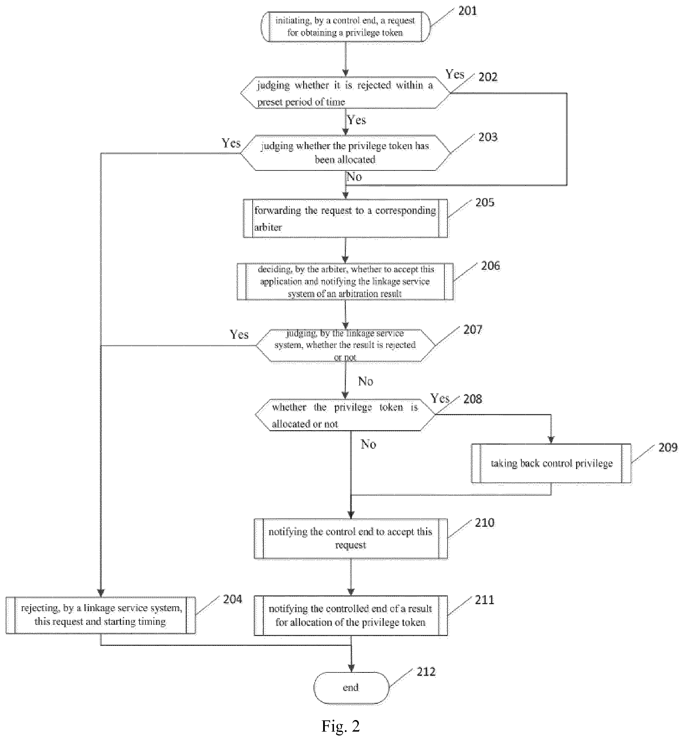

Fig. 2 is a flowchart of applying for a privilege token, a process of which comprises:
step 201), applying for, by a control end 101, a privilege token to a linkage service system 102;
step 202), judging, by the linkage service system 102 after receiving the request, whether the control end 101 was rejected within a preset period of time or not, and if yes, performing step 203); otherwise, performing step 205);
step 203), judging, by the linkage service system 102, whether the privilege token has been allocated or not, and if yes, performing step 204); otherwise, performing step 205);
step 204), rejecting, by the linkage service system 102, this linkage request, and re-starting timing; then performing step 212);
step 205), forwarding, by the linkage service system 102, the request to a corresponding arbiter according to configuration, and performing step 206);
step 206), deciding, by the arbiter, whether to accept this application and notifying the linkage service system 102 of an arbitration result, and then performing step 207);
step 207), judging, by the linkage service system 102, whether the result is rejected or not; if the result is rejected, performing step 204), and if the result is accepted, performing step 208);
step 208), judging, by the linkage service system 102, whether the privilege token has been allocated at this request or not; if yes, performing step 209); otherwise, performing step 210);
step 209), notifying, by the linkage service system 102, a linkage terminal, which formerly held the privilege token, to take back the control privilege, and then performing step 210);
step 210), notifying, by the linkage service system 102, the control end 101 to accept this request, and then performing step 211);
step 211), notifying, by the linkage service system 102, a controlled end 103 that its corresponding privilege token is allocated to the control end 101, and then performing step 212).
step 212), ending the entire flow.

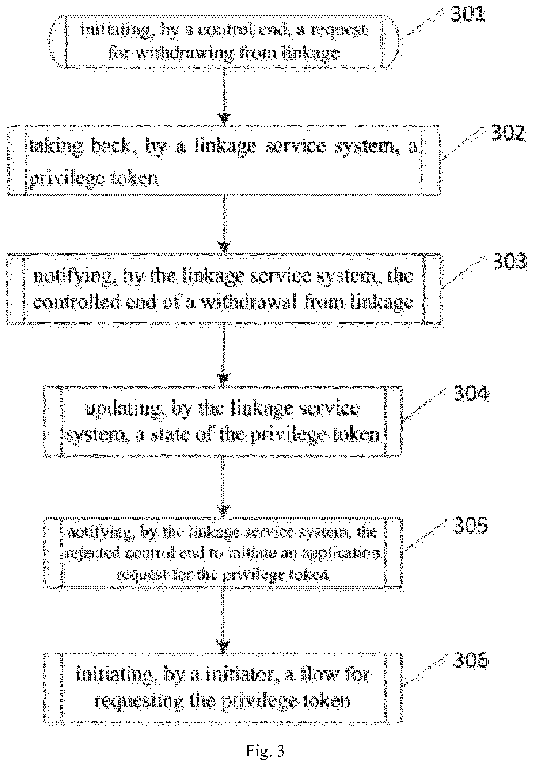

Fig. 3 is a flowchart of releasing a privilege token, a process of which comprises:
step 301), initiating, by a control end 101, a request for withdrawing from linkage, and then performing step 302);
step 302), recycling, by a linkage service system 102, a privilege token, and then performing step 303);
step 303), notifying, by the linkage service system 102, a controlled end 103 that a previous linkage has been removed, and then performing step 304);
step 304), updating, by the linkage service system 102, a linkage state, and then performing step 305);
step 305), notifying, by the linkage service system 102, a control end 101 which was rejected that it may re-initiate an application request for a privilege token, and then performing step 306);
step 306), re-applying for, by the control end 101 which was previously rejected, a privilege token. For specific implementation of this step, reference may be made to the process for applying for the privilege token as described in Fig. 2.

Finally, it should be explained that the foregoing embodiments are intended to merely illustrate rather than limit the technical solutions of the invention. While the present invention has been described in detail with reference to the embodiments, it shall be understood to those skilled in the art that various modifications or equivalent substitutions to the technical solutions of the present invention are within the scope of the claims of the present invention, without departing from the spirit and scope of the technical solutions of the invention.

## Claims

1. A device for managing linkage control privilege, **characterized in that** comprising a linkage service system (102) and linkage terminals; wherein there are a plurality of the linkage terminals, and in a same service instance one linkage terminal can only play one role within a same period of time: a control end (101) or a controlled end (103); the control end (101) obtains a privilege token of the controlled end (103) and performs in turn linkage control on the controlled end (103); the linkage service system (102) is configured to maintain the roles of the linkage terminals and states of the privilege tokens, process or transfer applications for the privilege tokens, and initiate or transfer recycling of the privilege tokens.

2. The device for managing linkage control privilege according to claim 1, **characterized in that** the linkage terminal, after getting online, applies for a role to the linkage service system (102), and the linkage service system (102) configures the role for the linkage terminal; when the linkage terminal is configured as the role of the controlled end, the linkage service system (102) generates for the linkage terminal a unique privilege token of linkage control corresponding to the role of the controlled end, i.e., the linkage service system (102) issues the privilege token to the linkage terminal; when the linkage terminal is modified to the role of the control end from the role of the controlled end or gets offline, the linkage service system (102) revokes the privilege token.

3. The device for managing linkage control privilege according to claim 1, **characterized in that** the privilege token of one controlled end (103) can only be held by one control end (101) within a same period of time, while one control end (101) can apply for or hold privilege tokens of multiple controlled ends (103).

4. The device for managing linkage control privilege according to claim 1, **characterized in that** when the control end (101) applies for a privilege token of linkage to the linkage service system (102), the privilege token is allocated or rejected to allocate according to rules, wherein the rules for allocating or rejecting to allocate privilege tokens include:
(1) an arbiter effects allocation of privilege tokens, and the linkage service system (102) or the controlled end (103) acts as the arbiter;
(2) if the arbiter is the linkage service system (102), then an application request for a privilege token, after being received from the control end (101), is processed directly; if the arbiter is the controlled end (13), then the linkage service system (102), after receiving the application request for the privilege token, forwards the request to the controlled end (103), and then the controlled end (103) processes the request;
(3) when the arbiter receives the application request for the privilege token from the control end (101), if the arbiter judges the privilege token is not held by other control end (101), the arbiter directly allocates the privilege token to the control end (101); if the privilege token is held by other control end 101, the arbiter takes back the privilege token and re-allocates it to the control end (101) or rejects the request;
(4) when it is within a preset period of time after the request of the control end (101) for the privilege token is rejected, and the privilege token is already held by other control end (101), if the control end (101) requests the same privilege token again, the linkage service system (102) directly rejects the request;
(5) the arbiter can recycle the privilege token according to a state of the control end (101), the state of the control end including, but not limited to: an online state, a session state, an interaction frequency or whether linkage control is beyond authority or not;
(6) when the control end (101) that formerly performed a linkage operation withdraws from linkage control, the linkage service system (102) proactively notifies the control end (101) whose request for the privilege token was rejected if the control end (101) performs linkage control.

5. The device for managing linkage control privilege according to claim 1, **characterized in that** instructions of role applications, as well as instructions of applications for, allocation and recycling of the privilege tokens, of the linkage terminals, are all through the linkage service system (102).

6. A method for managing linkage control privilege as implemented on the basis of the device for managing linkage control privilege according to any of claims 1 to 5, the method comprising applying for the privilege token, which specifically comprises:
step 201), applying for, by the control end (101), the privilege token to the linkage service system (102);
step 202), judging, by the linkage service system (102) after receiving the request, whether the control end (101) was rejected within a preset period of time or not, and if yes, performing step 203); otherwise, performing step 205);
step 203), judging, by the linkage service system (102), whether the privilege token has been allocated or not, and if yes, performing step 204); otherwise, performing step 205);
step 204), rejecting, by the linkage service system (102), this linkage request, and re-starting timing; and then performing step 212);
step 205), forwarding, by the linkage service system (102), the request to a corresponding arbiter according to configuration, and performing step 206);
step 206), deciding, by the arbiter, whether to accept this application and notifying the linkage service system (102) of an arbitration result, and then performing step 207);
step 207), judging, by the linkage service system (102), whether the result is rejected or not; and if the result is rejected, performing step 204), and if the result is accepted, performing step 208);
step 208), judging, by the linkage service system (102), whether the privilege token has been allocated at this request or not; if yes, performing step 209); otherwise, performing step 210);
step 209), notifying, by the linkage service system (102), the linkage terminal, which formerly held the privilege token, to take back the control privilege, and then performing step 210);
step 210), notifying, by the linkage service system (102), the control end (101) to accept this request, and then performing step 211);
step 211), notifying, by the linkage service system (102), the controlled end (103) that its corresponding privilege token is allocated to the control end (101), and then performing step 212).
step 212), ending the flow.

7. The method for managing linkage control privileges according to claim 6, **characterized in that** the method further comprises releasing the privilege token, which specifically comprises:
step 301), initiating, by the control end (101), a request for withdrawing from linkage, and then performing step 302);
step 302), recycling, by the linkage service system (102), the privilege token, and then performing step 303);
step 303), notifying, by the linkage service system (102), the controlled end (103) that a previous linkage has been removed, and then performing step 304);
step 304), updating, by the linkage service system (102), a linkage state, and then performing step 305);
step 305), notifying, by the linkage service system (102), the control end (101) which was rejected that it can re-initiate the application request for the privilege token, and then performing step 306);
step 306), re-applying for, by the control end (101) which was previously rejected, the privilege token.
